# EUROPEAN PATENT SPECIFICATION

(11) **EP 3 740 370 B1**
(45) Date of publication and mention of the grant of the patent: **06.04.2022**
(21) Application number: 18709072.5
(22) Date of filing: 18.01.2018
(51) Int. Cl.: B29C 49/42, B29C 49/06, B29L 31/00

(54) **PREFORM FEEDER FOR A BLOW MOLDING MACHINE AND BLOW MOLDING MACHINE**
VORFORMZUFÜHRER FÜR EINE BLASFORMMASCHINE UND BLASFORMMASCHINE
DISPOSITIF D'ALIMENTATION DE PRÉFORME POUR UNE MACHINE DE MOULAGE PAR SOUFFLAGE ET MACHINE DE MOULAGE PAR SOUFFLAGE

(43) Date of publication of application: 25.11.2020
(73) Proprietor: Bonino S.p.A., 15121 Alessandria (IT)
(72) Inventor: BONINO, Alessandro, 15121 Alessandria (IT); SAMBUELLI, Marco, 15121 Alessandria (IT)
(74) Representative: Leihkauf, Steffen Falk
(86) International application number: PCT/IB2018/050311
(87) International publication number: WO 2019/142013

(56) References cited:
- DE-A1-102012 107 088
- GB-A- 2 022 536
- US-A1- 2014 151 189
- US-B2- 8 109 381

## Description

The present invention in general relates to systems and methods for arranging a plurality of substantially identically shaped objects in sequence with a predetermined orientation, and for supplying such objects in a controlled manner in successive processing steps. In particular, the invention relates to a preform feeder for a blow molding machine and to a blow molding machine.

Blow molding (or blow forming) is a production process used to obtain hollow products made of plastic material or glass (e.g. bottles). Blow molding occurs by blowing compressed air into a preform positioned in a hollow mold so that by inflating the preform, it takes the shape of the inner walls of the mold. The molded product is then cooled and the mold is opened to remove the finished product.

Preforms may be made on site through an extruder coupled to the blow machinery, but in order to speed up production preforms usually are made in another plant and fed to the blow molding machine at increased speeds.

A typical example is the arrangement and feeding of thermoplastic preforms intended to be transformed by means of blow molding into plastic containers, for example PET bottles for beverages, cosmetic products or detergents. In order to be quickly and correctly gripped, for example by a star spacer wheel, all the preforms must have the same predetermined orientation and are to be arranged in a single row, preferably in slight pressured contact with one another.

Considering the example of a typical preform 1 with a blowable portion 2, for example substantially cylindrical, a reference flange 3 radially protruding with respect to the blowable portion 2 and an externally threaded opening portion (neck) 4 (**figure 9**), such a predetermined orientation and feeding of the objects may be obtained by means of a known system, comprising:

- an orientation device, for example a rotating orientation device, fed with the preforms in a bulk and which provides to singularize and orientate the preforms,

- a conveyor, for example a blow conveyor, arranged between the orientation device and a blow molding machine, which picks the preforms that are oriented, singularized and put in a row by the orientation device and conveys them to the blow molding machine.

The systems of the known art still have certain drawbacks.

To obtain increased production speeds, there is a need for the conveyor to transport the individual preforms at a speed which is greater than the transfer speed of the preforms in the molding unit of the blow molding machine, and for the transported preforms to be arranged at the outlet of the conveyor in a compacted row with the individual preforms in contact with one another so as to be quickly picked or received by a transfer device, for example containing a star-wheel, which transfers the preforms from the conveyor into the blow mold.

One disadvantage of preform feeders and conveyors of the known art consists of the increased risk of damage due to knocks, which at times are violent, to which the preforms transported by means of compressed air blows are subject, in particular in a final accumulation area of the preforms where the arriving preforms hit the stationary preforms or slowed down preforms ready to be transferred to the molding unit.

A further disadvantage of the preform conveyors of the known art consists of the fact that the accumulated preforms are not always constantly held in contact with one another in the accumulation area at the inlet of the blow mold module, rather they are repeatedly shaken by the impacts of the new, arriving preforms. These impacts generate a rebound effect on the whole row of accumulated preforms, at least temporarily causing undesired distances between the individual accumulated preforms. These unplanned distances prevent a correct and quick gripping of the preforms, for example by means of a star-wheel, for the transfer thereof to the molding unit.

The aforesaid problems limit increasing the conveying speed of the preforms and the feed speed of the preforms to the blow molding unit.

More generically, the aforesaid problems limit increasing the feed speed of semi-finished objects to a processing/conversion unit of a processing/conversion machine.

It is therefore the object of the present invention to provide a preform feeder for a blow molding machine and a blow molding machine having such features so as to obviate one or more of the drawbacks of the known art.

US2014151189A and DE102012107088 describe exemplary prior art product feeders and feeding methods.

These and other objects are achieved by a preform feeder according to claim 1. The dependent claims relate to advantageous embodiments.

According to one aspect of the invention, a preform feeder for a blow molding machine comprises:
- a belt conveyor for transporting the preforms from an inlet point to an outlet point, said belt conveyor comprising:
   - a belt extending along a belt path having a conveying stretch from said inlet point to said outlet point,
   - a motor for moving the belt along the belt path,
   - a perforation formed in the belt,
- a suction device configured to carry out, along the conveying stretch, a suction through the perforation of the belt in which said suction holds the preforms against the belt along the conveying stretch,
- a transfer device configured to receive the preforms from the belt at the outlet point, and comprising an accumulation surface against which the belt pushes the preforms,
in which the accumulation surface slows down the preforms with respect to the movement of the belt, thus causing a tail of slowed down preforms, one in contact with the other, which extends from the outlet point in the conveying stretch.

According to a further aspect of the invention, the suction holds the slowed down preforms in pressured (but sliding) contact with the belt and the relative movement between the belt and the slowed down preforms pushes the slowed down preforms in pressured contact one against the other and towards the outlet point.

According to a further aspect again of the invention, a blow molding machine comprises:
- a molding unit for molding hollow objects from preforms, said molding unit comprising:
   - one or more molds, and
   - one or more heating devices associated with the molds, and
   - one or more blow devices associated with the molds,
   - one or more cooling devices associated with the molds,
- the aforesaid preform feeder for feeding the preforms from outside the blow molding machine to the molding unit,
- an outlet conveyor configured to transport the molded hollow objects from the molding unit outside the blow molding machine.

According to a further aspect again of the invention, a method for feeding preforms to a molding unit of a blow molding machine according to claim 13 is provided.

Generalizing the idea of the invention, the preforms represent a specific example of semi-finished products/generic solid products, the blow molding machine represents a specific example of a generic processing/transformation/inspection machine, the molding unit represents a specific example of a generic processing/transformation/inspection unit for making a product from the semi-finished product and/or for inspecting (for example, by means of one or more cameras or other sensors) a product, and the molded hollow object represents a specific example of a generic product or semi-finished product to be subjected to a processing/transformation/inspection step.

Due to the suction of the semi-finished products against the belt, both during the quick transport thereof and during the slowed down transport thereof in the tail at the outlet point, the quick transport occurs in a controlled manner and at a much slower speed with respect to a transport by means of compressed air blowing. Accordingly, the risk of damaging the preforms due to knocks is significantly reduced.

Moreover, the slowed down preforms in the tail at the outlet point are kept stationary one with respect to the other by the suction of the belt and therefore, they can not rebound and move away from one another following knocks received by other arriving preforms. Maintaining the positioning of the slowed down preforms allows a correct and quicker gripping of the preforms by means of the transfer device and therefore, quicker feeding of the preforms to the molding unit.

More generically, an increase in the feed speed of semi-finished objects to the processing/conversion unit of the processing/conversion machine, is obtained.

To better understand the invention and appreciate its advantages, certain non-limiting embodiments thereof are described below, while referring to the drawings, in which:

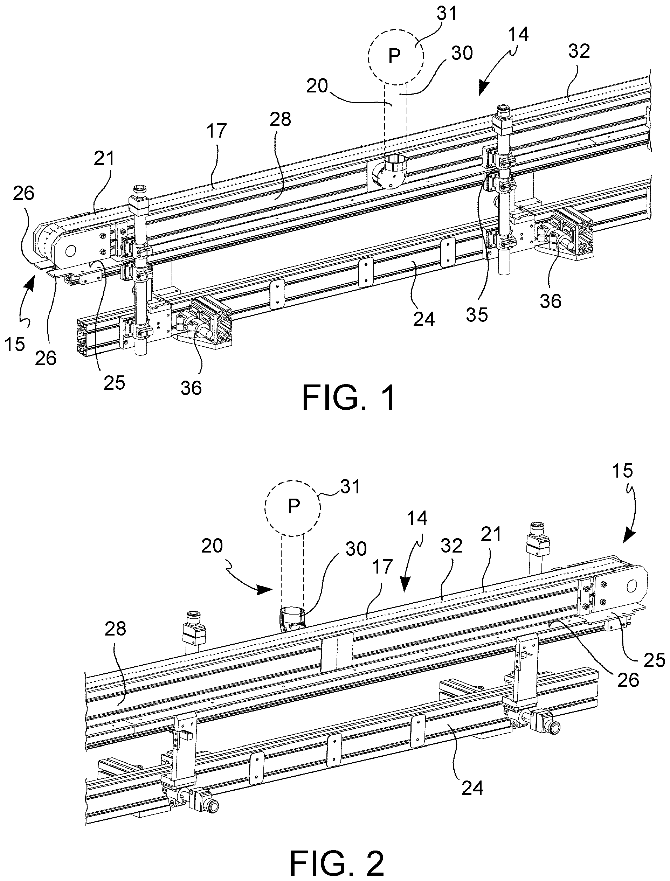

Figures 1 and 2 are partial perspective side views of a belt conveyor of a preform feeder according to one embodiment.

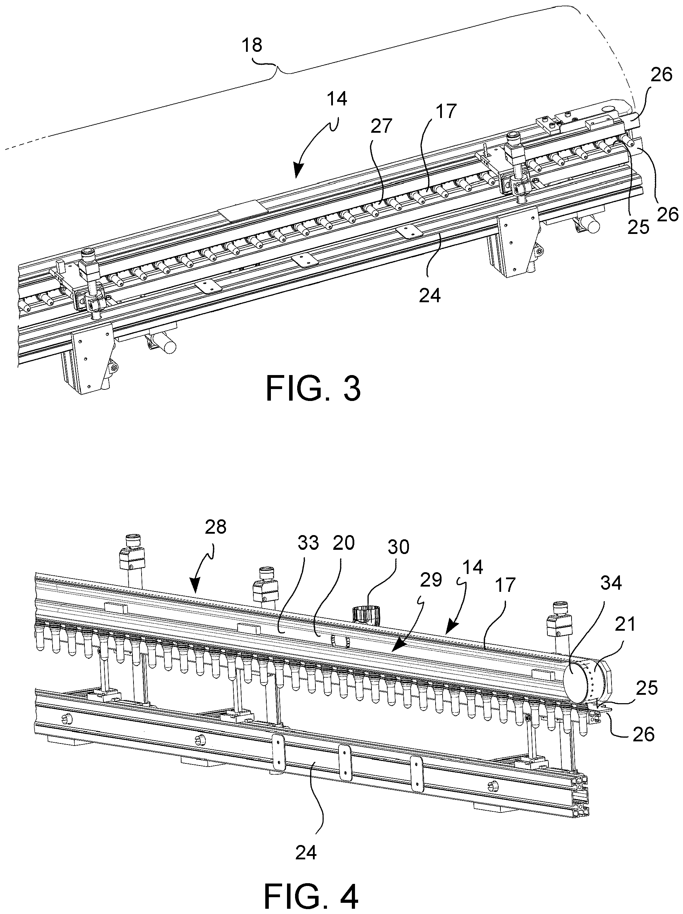

Figure 3 is a partial perspective bottom view of the belt conveyor in figure 1.
Figure 4 is a vertical-longitudinal sectional view of a detail of the belt conveyor in figure 1.

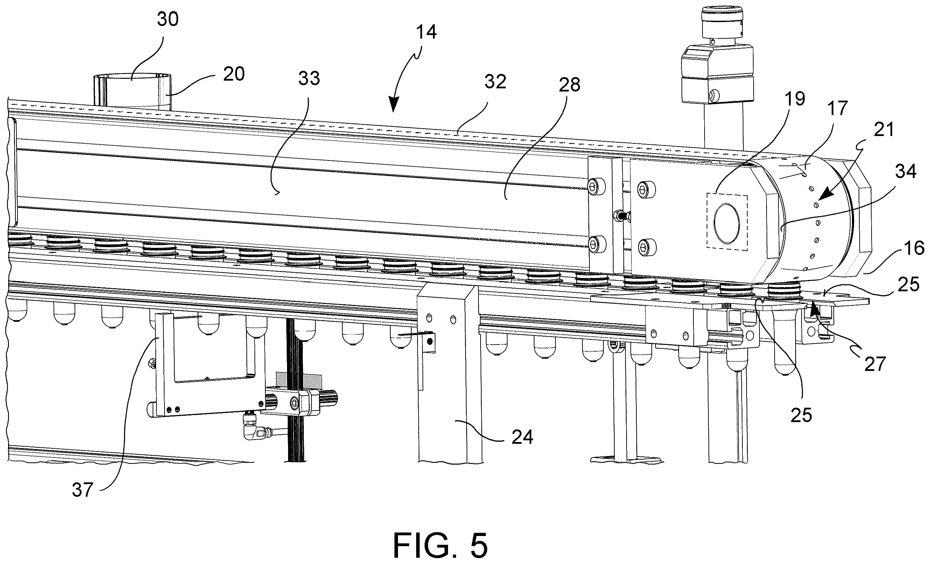

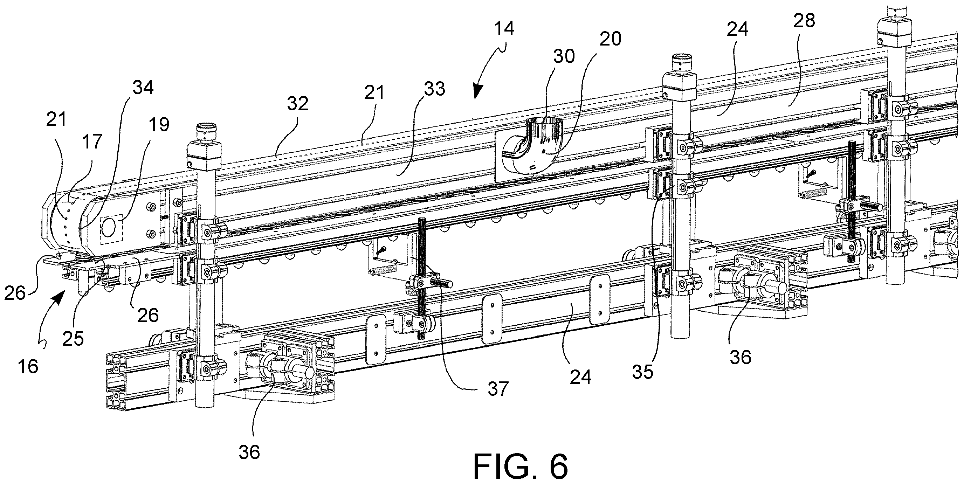

Figures 5 and 6 are partial perspective views of an orientation device according to one embodiment.
Figure 7 is a side view of a preform for blow molding PET bottles.
Figure 8 shows a blow molding machine with a preform feeder according to one embodiment.

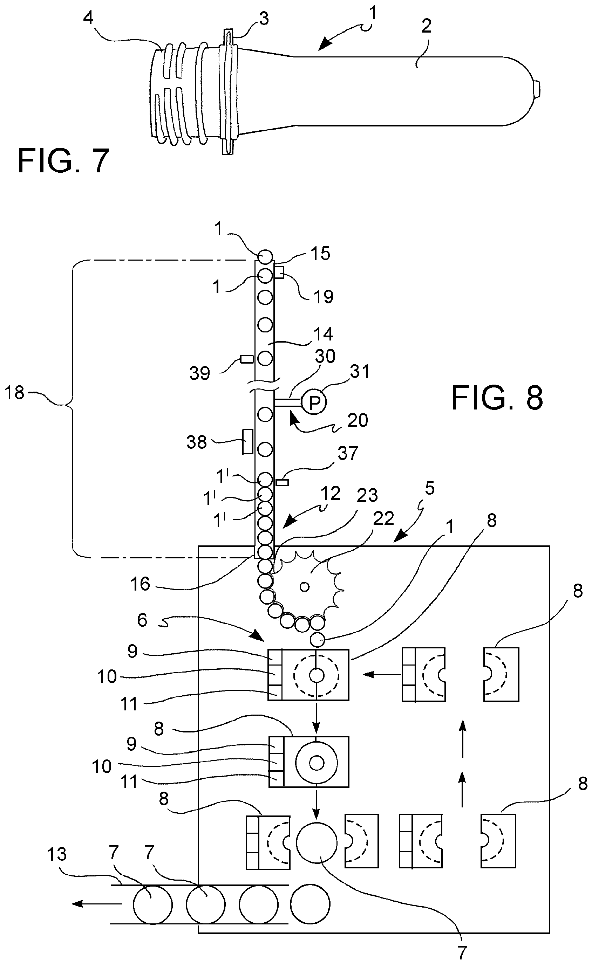

Figure 8 shows a blow molding machine 5 with a molding unit 6 for molding hollow objects 7 (e.g. PET bottles) from preforms 1. The molding unit 6 comprises one or more molds 8 suitable for receiving the preforms 1, one or more heating devices 9 associated with the molds 8 to heat the preforms 1, one or more blow devices 10 associated with the molds 8 to expand the preforms 1 in the molds 8 to form the molded object 7, and also one or more cooling devices 11 associated with the molds 8 to cool the molded object 7 before the extraction thereof from mold 8.

The blow molding machine 5 further comprises a feeder 12 for feeding the preforms 1 to the molding unit 6 from the outside of the blow molding machine 5, and also an outlet conveyor 13 for transporting the hollow molded objects 7 from the molding unit 6 outside the blow molding machine 5.

According to one aspect of the invention, the feeder 12 of preforms 1 for the blow molding machine 5 comprises a belt conveyor 14 for transporting the preforms 1 from an inlet point 15 to an outlet point 16. The belt conveyor 14 comprises a belt 17 extending along a belt path (preferably a closed loop path, redirected at the inlet 15 and outlet 16 points) having a conveying stretch 18 extending from the inlet point 15 to the outlet point 16, and also one or more motors 19 for moving belt 17 along the belt path.

Feeder 12 further comprises a suction device 20 configured to carry out, along the conveying stretch 18, a suction through a perforation 21 of belt 17, in which said suction holds the preforms 1 against belt 17 along the conveying stretch 18.

Feeder 12 is suitable for cooperating with or comprises a transfer device 22, for example one or more star-wheels, one or more transfer augers, one or more gripping and transfer grippers, a transfer channel, etc., configured to receive the preforms 1 from belt 17 at the outlet point 16 and to transfer the received preforms 1 to the molding unit 6. The belt conveyor 14 or the transfer device 22 forms an accumulation surface 23 against which belt 17 pushes the preforms 1. The accumulation surface 23 slows down the preforms 1 with respect to the movement of belt 17, thus causing a tail (with a single row) of slowed down preforms 1' (figure 8), one in contact with the other, which extends from the outlet point 16 in the conveying stretch 18.

According to embodiments, the accumulation surface 23 may be formed for example by a partition or friction wall positioned at the outlet point 16, or by one or more transfer members (e.g. star-wheels, transfer augers, transfer channel, etc.) of the transfer device 22.

Advantageously, the suction holds the slowed down preforms 1' in pressured but sliding contact with belt 17 and the relative movement between belt 17 and the slowed down preforms 1' pushes the slowed down preforms 1' in pressured contact one against the other and towards the outlet point 16.

According to one embodiment, the belt conveyor 14 comprises a support structure 24 which supports belt 17, motor 19 and the suction device 20 and which is suitable for receiving, at the inlet point 15, a single row of preforms 1 all having the same orientation, and for releasing, at the outlet point 16, a single row of preforms 1 all having the same orientation.

The support structure 24 may comprise one or more sliding or anti-fall surfaces 25 extending along the conveying stretch 18 at a distance from the belt 17 and suitable for preventing the falling of the preforms 1 outside the belt conveyor 14 and/or for supporting the preforms 1, for example in a hanging manner, in the support structure 24.

The sliding surfaces 25 are formed by two elongate sliding profiles 26 (continuous or interrupted, preferably plates) extending along the conveying stretch 18 and spaced apart from each other horizontally (in transverse direction to the transport direction) so as to delimit a guide slot 27 below the belt 17. The preforms 1 sucked against belt 17 from below are conveyed and possibly guided in the guide slot 27. In the event of interruption or decrease of the suction, the preforms 1 may be detached from belt 17 and be supported on the sliding profiles 26 by means of the reference flange 3.

The support structure 24 forms an upper housing 28 which supports the belt 17 and delimits one or more suction chambers 29 positioned on or extending along the conveying stretch 18 and in communication with one or more suction conduits 30 connected to a vacuum source, for example a pump or a suction fan 31.

Belt 17 may extend about the suction chamber 29 so as to delimit the suction chamber 29 on a suction side, preferably facing downwards, so as to suck from above through the perforation 21 of belt 17 and to hold the preforms 1 hanging below belt 17. In this embodiment, the belt path forms an upper return stretch 32 and the lower conveying stretch 18 for a conveying of the preforms 1 in a hanging manner.

As is shown in the drawings, the preforms 1 are oriented with the opening portion 4 thereof facing (and in contact with) the belt 17. Thereby, the suction may easily create a vacuum inside the preform 1 to better hold it against belt 17.

The upper housing 28 forms two opposite side walls 33 spaced apart from each other, which laterally delimit the suction chamber 29, and also an upper wall 34 which delimits the suction chamber 29 from above and forms a support for the belt 17 in the return stretch 32.

Guides or support surfaces engaging side edges of belt 17 may be provided to avoid a catenary deformation of belt 17 along the conveying stretch 18.

The belt conveyor 14 further comprises two idler members 34 about which the belt 17 extends, for example idler or motorized pulleys, or sliding return surfaces, preferably positioned at the upper housing 28 at the inlet 15 and outlet 16 points.

According to one embodiment, the perforation 21 consists of or is formed by one single row of holes extending along the whole length of belt 17 and arranged halfway between the side edges of belt 17. This avoids an unnecessary suction close to the side edges of belt 17 and reduces the energy consumption of the suction device 20.

According to one embodiment, the belt conveyor 14 comprises adjustment means for a continuous adjustment of a horizontal distance (transverse to the transport direction) between the sliding profiles 26 and for a continuous adjustment of a vertical distance between the sliding profiles 26 and the belt 17 along the conveying stretch 18.

This allows the adaptation of the belt conveyor 14 to preforms 1 of different sizes, and also for different tilts or curves of the conveying stretch 18.

In one embodiment, the adjustment means comprise one or more vertical screw adjustment mechanisms 35 interposed between the support structure 24 or the sliding profiles 26 and the upper housing 28, and also horizontal screw adjustment mechanisms 36 interposed between the sliding profiles 26 and possibly operable by means of an adjustment motor or manually operable, for example by means of an adjustment knob.

According to a further embodiment, feeder 12 comprises a minimum tail detector 37 (e.g. an optical sensor) positioned at the conveying stretch 18 at a distance from the outlet point 16 corresponding to a minimum tail length of slowed down preforms 1' and configured to provide a minimum tail signal. The minimum tail detector 37 is in signal connection with a control unit 38 of the preform feeder 12 which controls the motor 19 and the speed of the belt 14 according to the minimum tail signal, for example by increasing the speed of belt 14 if the tail length is less than the minimum tail length.

According to a further embodiment, the feeder 12 comprises a maximum tail detector 39 (e.g. an optical sensor) positioned at the conveying stretch 18 at a distance from the outlet point 16 corresponding to a maximum tail length of slowed down preforms 1' and configured to provide a maximum tail signal. The maximum tail detector 39 is in signal connection with the control unit 38 of the preform feeder 12 which controls the motor 19 and the speed of belt 14 according to the maximum tail signal, for example by stopping belt 14 or reducing the speed of belt 14 if the tail length is greater than the maximum tail length.

The invention also relates to the method of feeding preforms to the molding unit, and also the molding method described in relation to the description of the feeder and of the blow molding machine and here not repeated for the sake of brevity.

## Claims

1. A feeder (12) of products or semi-finished products (1) for a transformation or inspection machine (5), comprising:
- a belt conveyor (14) for transporting the products or semi-finished products (1) from an inlet point (15) to an outlet point (16), said belt conveyor (14) comprising:
- a belt (17) extending along a belt path having a conveying stretch (18) from said inlet point (15) to said outlet point (16),
- a motor (19) for moving the belt (17) along the belt path,
- a suction device (20) configured to carry out, along the conveying stretch (18), a suction through a perforation (21) formed in the belt (17),
- a transfer device (22) configured to receive the products or semi-finished products (1) from the belt (17) at the outlet point (16),
**characterized in that**:
- said suction holds the products or semi-finished products (1) against the belt (17) along the conveying stretch (18),
- the feeder (12) comprises an accumulation surface (23) against which the belt (17) pushes the products or semi-finished products (1) and which slows down the products or semi-finished products (1) with respect to the movement of the belt (17), thus causing a tail of slowed down products or semi-finished products (1'), one in contact with the other, which extends from the outlet point (16) in the conveying stretch (18).

2. A feeder (12) according to claim 1, wherein said semi-finished products (1) are preforms (1), said transformation machine (5)is a blow molding machine (5).

3. A feeder (12) according to claim 2, wherein the suction holds the slowed down preforms (1') in pressured but sliding contact with the belt (17) and the related movement between the belt (17) and the slowed down preforms (1') pushes the slowed down preforms (1') in pressured contact one against the other and towards the outlet point (16).

4. A feeder (12) according to any one of claims 2 to 3, wherein the transfer device (22) is selected in the group consisting of:
- one or more star-wheels,
- one or more augers,
- one or more gripping and transfer grippers,
- one transfer channel.

5. A feeder (12) according to any one of claims 2 to 4, wherein the accumulation surface (23) is formed by one or more transfer members of the transfer device (22).

6. A feeder (12) according to any one of claims 2 to 5, wherein the belt conveyor (14) comprises a support structure (24) which supports the belt (17), the motor (19) and the suction device (20) and which is suitable for receiving, at the inlet point (15), one single row of preforms (1) all having the same orientation, and for releasing, at the outlet point (16), a single row of preforms (1) all having the same orientation.

7. A feeder (12) according to any one of claims 2 to 6, comprising one or more sliding or anti-fall surfaces (25) extending along the conveying stretch (18) at a distance from the belt (17) and suitable for preventing the falling of the preforms (1) outside the belt conveyor (14).

8. A feeder (12) according to any one of claims 2 to 7, wherein the belt (17) and the suction device (20) are configured so as to suck from above through the perforation (21) of the belt (17) and to hold the preforms (1) hanging below the belt (17).

9. A feeder (12) according to any one of claims 2 to 8, wherein the perforation (21) consists of a single row of holes extending along the whole length of the belt (17) and arranged halfway between side edges of the belt (17).

10. A feeder (12) according to any one of claims 2 to 9, comprising:
- a minimum tail detector (37) positioned at the conveying stretch (18) at a distance from the outlet point (16) corresponding to a minimum tail length of slowed down preforms (1') and configured to provide a minimum tail signal to a control unit (38) of the preform feeder (12),
- a maximum tail detector (39) positioned at the conveying stretch (18) at a distance from the outlet point (16) corresponding to a maximum tail length of slowed down preforms (1') and configured to provide a maximum tail signal to the control unit (38) with,
wherein said control unit (38) controls the motor (19) and the speed of the belt (14) according to the minimum tail signal and the maximum tail signal.

11. A blow molding machine (5), comprising:
- a molding unit (6) for molding hollow objects (7) from preforms (1), said molding unit (6) comprising:
- at least one mold (8) suitable for receiving the preform (1),
- at least one heating device (9) associated with the mold (8) to heat the preform (1),
- at least one blow device (10) associated with the mold (8) to expand the preform (1) in the mold (8) to form the hollow object (7),
- at least one cooling device (11) associated with the mold (8) to cool the hollow object (7),
- a feeder (12) according to any one of claims 2 to 10 for feeding the preforms (1) from the outside of the blow molding machine (5) to the molding unit (6),
- an outlet conveyor (13) for transporting the hollow objects (7) from the molding unit (6) outside the blow molding machine (5).

12. A transformation or inspection machine (5) comprising:
- a transformation or inspection unit (6) for making products (7) from semi-finished products (1) or for inspecting products or semi-finished products,
- a feeder (12) according to claim 1, for feeding the products or semi-finished products (1) from the outside of the transformation or inspection machine (5) to the transformation or inspection unit (6),
- an outlet conveyor (13) for transporting the products (7) from the transformation or inspection unit (6) outside the transformation or inspection machine (5).

13. A method for feeding products or semi-finished products (1) to a transformation or inspection unit (6) of a transformation or inspection machine (5), comprising the steps of:
- conveying the products or semi-finished products (1) from an inlet point (15) to an outlet point (16) by moving a belt (17) along a belt path having a conveying stretch (18) from said inlet point (15) to said outlet point (16),
- receiving the products or semi-finished products (1) from the belt (17) at the outlet point (16) and transferring the received products or received semi-finished products (1) to the transformation unit (6),
**characterized by**:
- holding the products or semi-finished products (1) against the belt (17) along the conveying stretch (18) by means of a suction through a perforation (21) formed in the belt (17),
- providing an accumulation surface (23) against which the belt (17) pushes the products or semi-finished products (1) so as to slow down the products or semi-finished products (1) with respect to the movement of the belt (17) and to cause a tail of slowed down products or semi-finished products (1'), one in contact with the other, which extends from the outlet point (16) in the conveying stretch (18),
- using the suction to hold the slowed down products or semi-finished products (1') in pressured but sliding contact with the belt (17),
- using the relative movement between the belt (17) and the slowed down products or semi-finished products (1') to push the slowed down products or semi-finished products (1') in pressured contact one against the other and towards the outlet point (16).

14. The method according to claim 13, wherein said semi-finished products (1) are preforms (1) and said transformation unit (6) of said transformation machine (5) is a molding unit (6) of a blow molding machine (5).

## Patentansprüche

1. Zuführer (12) für Produkte oder halbfertige Produkte (1) für eine Bearbeitungs- oder Inspektionsmaschine (5), umfassend:
- ein Förderband (14) zum Transportieren der Produkte oder halbfertigen Produkte (1) von einem Einlasspunkt (15) zu einem Auslasspunkt (16), wobei das Förderband (14) umfasst:
∘ ein Band (17), welches sich entlang eines Bandpfads erstreckt, eine Förderstrecke (18) von dem Einlasspunkt (15) zu dem Auslasspunkt (16) aufweisend,
∘ einen Motor (19) zum Bewegen des Bands (17) entlang des Bandpfads,
- eine Absaugvorrichtung (20), welche dazu eingerichtet ist, entlang der Förderstrecke (18) ein Absaugen durch eine in dem Band (17) gebildete Perforierung (21) durchzuführen,
- eine Transfervorrichtung (22), welche dazu eingerichtet ist, die Produkte oder halbfertigen Produkte (1) von dem Band (17) an dem Auslasspunkt (16) zu empfangen,
**dadurch gekennzeichnet, dass**:
- das Absaugen die Produkte oder halbfertigen Produkte (1) gegen das Band (17) entlang der Förderstrecke (18) hält,
- der Zuführer (12) eine Akkumulationsfläche (23) umfasst, gegen welche das Band (17) die Produkte oder halbfertigen Produkte (1) drückt, und welche die Produkte oder halbfertigen Produkte (1) bezüglich der Bewegung des Bands (17) abbremst, wodurch ein Nachlauf von abgebremsten Produkten oder halbfertigen Produkten (1') hervorgerufen wird, eines in Kontakt mit dem anderen, welcher sich von dem Auslasspunkt (16) in der Förderstrecke (18) erstreckt.

2. Zuführer (12) nach Anspruch 1, wobei die halbfertigen Produkte (1) Vorformlinge (1) sind, wobei die Bearbeitungsmaschine (5) eine Blasformmaschine (5) ist.

3. Zuführer (12) nach Anspruch 2, wobei das Ansaugen die abgebremsten Vorformlinge (1') in unter Druck stehendem, jedoch gleitenden Kontakt mit dem Band (17) hält und die verbundene Bewegung zwischen dem Band (17) und den abgebremsten Vorformlingen (1') die abgebremsten Vorformlinge (1') in unter Druck stehendem Kontakt einen gegen den anderen und in Richtung des Auslasspunkts (16) drückt.

4. Zuführer (12) nach einem der Ansprüche 2 bis 3, wobei die Transfervorrichtung (22) in der Gruppe ausgewählt ist aus:
- einem oder mehreren Sternrädern,
- einem oder mehreren Schneckenförderern,
- einem oder mehreren Greif-und-Transfer-Greifern,
- einem Transferkanal.

5. Zuführer (12) nach einem der Ansprüche 2 bis 4, wobei die Akkumulationsfläche (23) durch ein oder mehrere Transferelemente der Transfervorrichtung (22) gebildet ist.

6. Zuführer (12) nach einem der Ansprüche 2 bis 5, wobei das Förderband (14) eine Tragestruktur (24) umfasst, welche das Band (17), den Motor (19) und die Saugvorrichtung (20) trägt und welche geeignet ist, an dem Einlasspunkt (15) eine einzelne Reihe von Vorformlingen (1) zu empfangen, welche alle dieselbe Orientierung aufweisen, und an dem Auslasspunkt (16) eine einzelne Reihe von Vorformlingen (1) freizugeben, welche alle dieselbe Orientierung aufweisen.

7. Zuführer (12) nach einem der Ansprüche 2 bis 6, umfassend eine oder mehrere gleitende oder Anti-Fall-Fläche (25), welche sich entlang der Förderstrecke (18) bei einer Distanz von dem Band (17) erstreckt und geeignet ist, das Fallen der Vorformlinge (1) außerhalb des Förderbands (14) zu verhindern.

8. Zuführer (12) nach einem der Ansprüche 2 bis 7, wobei das Band (17) und die Saugvorrichtung (20) derart eingerichtet sind, dass sie von oberhalb durch die Perforierung (21) des Bands (17) saugt und die Vorformlinge (1) unterhalb des Bands (17) hängend hält.

9. Zuführer (12) nach einem der Ansprüche 2 bis 8, wobei die Perforierung (21) aus einer einzelnen Reihe von Löchern besteht, welche sich entlang der gesamten Länge des Bands (17) erstreckt und auf halber Strecke zwischen Seitenrändern des Bands (17) angeordnet ist.

10. Zuführer (12) nach einem der Ansprüche 2 bis 9, umfassend:
- einen minimalen Nachlauf-Detektor (37), welcher an der Förderstrecke (18) bei einer Distanz von dem Auslasspunkt (16) positioniert ist, welche einer minimalen Nachlauflänge von abgebremsten Vorformlingen (1') entspricht, und dazu eingerichtet ist, ein minimales Nachlauf-Signal zu einer Steuereinheit (38) des Vorformling-Zuführers (12) bereitzustellen,
- einen maximalen Nachlauf-Detektor (39), welcher an der Förderstrecke (18) bei einer Distanz von dem Auslasspunkt (16) positioniert ist, welche einer maximalen Nachlauflänge von abgebremsten Vorformlingen (1') entspricht, und dazu eingerichtet ist, ein maximales Nachlauf-Signal zu der Steuereinheit (38) bereitzustellen,
- wobei die Steuereinheit (38) den Motor (19) und die Geschwindigkeit des Bands (14) gemäß dem minimalen Nachlauf-Signal und dem maximalen Nachlauf-Signal steuert.

11. Blasformmaschine (5), umfassend:
- eine Formeinheit (6) zum Formen von hohlen Objekten (7) aus Vorformlingen (1), wobei die Formeinheit (6) umfasst:
∘ wenigstens eine Form (8), welche zum Empfangen des Vorformlings (1) geeignet ist,
∘ wenigstens eine Heizvorrichtung (9), welche der Form (8) zugeordnet ist, um den Vorformling (1) zu heizen,
∘ wenigstens eine Blasevorrichtung (10), welche der Form (8) zugeordnet ist, um den Vorformling (1) in der Form (8) auszudehnen, um das hohle Objekt (7) zu bilden,
∘ wenigstens eine Kühlvorrichtung (11), welche der Form (8) zugeordnet ist, um das hohle Objekt (7) zu kühlen,
- einen Zuführer (12) nach einem der Ansprüche 2 bis 10, um die Vorformlinge (1) von der Außenseite der Blasformmaschine (5) zu der Formeinheit (6) zuzuführen,
- einen Auslassförderer (13) zum Transportieren der hohlen Objekte (7) von der Formeinheit (6) außerhalb der Blasformmaschine (5).

12. Bearbeitungs- oder Inspektionsmaschine (5), umfassend:
- eine Bearbeitungs- oder Inspektionseinheit (6) zum Herstellen von Produkten (7) aus halbfertigen Produkten (1) oder zum Inspizieren von Produkten oder halbfertigen Produkten,
- einen Zuführer (12) nach Anspruch 1 zum Zuführen der Produkte oder halbfertigen Produkte (1) von der Außenseite der Bearbeitungs- oder Inspektionsmaschine (5) zu der Bearbeitungs- oder Inspektionseinheit (6),
- einen Auslassförderer (13) zum Transportieren der Produkte (7) von der Bearbeitungs- oder Inspektionseinheit (6) außerhalb der Bearbeitungs- oder Inspektionsmaschine (5).

13. Verfahren zum Zuführen von Produkten oder halbfertigen Produkten (1) zu einer Bearbeitungs- oder Inspektionseinheit (6) einer Bearbeitungs- oder Inspektionsmaschine (5), umfassend die Schritte:
- Fördern der Produkte oder halbfertigen Produkte (1) von einem Einlasspunkt (15) zu einem Auslasspunkt (16) durch Bewegen eines Bands (17) entlang eines Bandpfads mit einer Förderstrecke (18) von dem Einlasspunkt (15) zu dem Auslasspunkt (16),
- Empfangen der Produkte oder halbfertigen Produkte (1) von dem Band (17) an dem Auslasspunkt (16) und Übertragen der empfangenen Produkte oder empfangenen halbfertigen Produkte (1) zu der Bearbeitungseinheit (6), **gekennzeichnet durch**:
- Halten der Produkte oder halbfertigen Produkte (1) gegen das Band (17) entlang der Förderstrecke (18) mittels eines Absaugens durch eine Perforierung (21), welche in dem Band (17) gebildet ist,
- Bereitstellen einer Akkumulationsfläche (23), gegen welche das Band (17) die Produkte oder halbfertigen Produkte (1) drückt, um so die Produkte oder halbfertigen Produkte (1) bezüglich der Bewegung des Bands (17) abzubremsen und einen Nachlauf von abgebremsten Produkten oder halbfertigen Produkten (1') hervorzurufen, eines in Kontakt mit dem anderen, welcher sich von dem Auslasspunkt (16) in der Förderstrecke (18) erstreckt,
- Verwenden des Absaugens, um die abgebremsten Produkte oder halbfertigen Produkte (1) in unter Druck stehendem, jedoch gleitenden Kontakt mit dem Band (17) zu halten,
- Verwenden der relativen Bewegung zwischen dem Band (17) und den abgebremsten Produkten oder halbfertigen Produkten (1'), um die abgebremsten Produkte oder halbfertigen Produkte (1') in unter Druck stehendem Kontakt das eine gegen das andere und in Richtung des Auslasspunkts (16) zu drücken.

14. Verfahren nach Anspruch 13, wobei die halbfertigen Produkte (1) Vorformlinge (1) sind und die Bearbeitungseinheit (6) der Bearbeitungsmaschine (5) eine Formeinheit (6) einer Blasformmaschine (5) ist.

## Revendications

1. Dispositif d'alimentation (12) de produits ou de produits semi-finis (1) pour une machine de transformation ou d'inspection (5), comprenant :
- un convoyeur à bande (14) pour transporter les produits ou produits semi-finis (1) depuis un point d'entrée (15) jusqu'à un point de sortie (16), ledit convoyeur à bande (14) comprenant :
- une courroie (17) s'étendant le long d'un chemin de courroie ayant une étendue de convoyage (18) depuis ledit point d'entrée (15) jusqu'audit point de sortie (16),
- un moteur (19) pour déplacer la courroie (17) le long du chemin de courroie,
- un dispositif d'aspiration (20) configuré pour réaliser, le long de l'étendue de convoyage (18), une aspiration à travers une perforation (21) formée dans la courroie (17),
- un dispositif de transfert (22) configuré pour recevoir les produits ou produits semi-finis (1) depuis la courroie (17) au point de sortie (16),
**caractérisé en ce que** :
- ladite aspiration maintient les produits ou produits semi-finis (1) contre la courroie (17) le long de l'étendue de convoyage (18),
- le dispositif d'alimentation (12) comprend une surface d'accumulation (23) contre laquelle la courroie (17) pousse les produits ou produits semi-finis (1) et qui ralentit les produits ou produits semi-finis (1) par rapport au mouvement de la courroie (17), en provoquant ainsi une file de produits ou produits semi-finis ralentis (1'), en contact l'un avec l'autre, qui s'étend depuis le point de sortie (16) dans l'étendue de convoyage (18).

2. Dispositif d'alimentation (12) selon la revendication 1, dans lequel lesdits produits semi-finis (1) sont des préformes (1), ladite machine de transformation (5) est une machine de moulage par soufflage (5).

3. Dispositif d'alimentation (12) selon la revendication 2, dans lequel l'aspiration maintient les préformes ralenties (1') en contact sous pression mais glissant avec la courroie (17) et le mouvement relatif entre la courroie (17) et les préformes ralenties (1') pousse les préformes ralenties (1') en contact sous pression les unes contre les autres et vers le point de sortie (16).

4. Dispositif d'alimentation (12) selon la revendication 2 ou 3, dans lequel le dispositif de transfert (22) est sélectionné dans le groupe se composant de :
- une ou plusieurs roues en étoile,
- une ou plusieurs vis sans fin,
- un ou plusieurs préhenseurs de prise et de transfert,
- un canal de transfert.

5. Dispositif d'alimentation (12) selon l'une quelconque des revendications 2 à 4, dans lequel la surface d'accumulation (23) est formée par un ou plusieurs organes de transfert du dispositif de transfert (22).

6. Dispositif d'alimentation (12) selon l'une quelconque des revendications 2 à 5, dans lequel le convoyeur à bande (14) comprend une structure de support (24) qui supporte la courroie (17), le moteur (19) et le dispositif d'aspiration (20) et qui est appropriée pour recevoir, au point d'entrée (15), une rangée unique de préformes (1) ayant toutes la même orientation, et pour libérer, au point de sortie (16), une rangée unique de préformes (1) ayant toutes la même orientation.

7. Dispositif d'alimentation (12) selon l'une quelconque des revendications 2 à 6, comprenant une ou plusieurs surfaces de glissement ou antichute (15) s'étendant le long de l'étendue de convoyage (18) à une distance de la courroie (17) et appropriées pour empêcher la chute des préformes (1) à l'extérieur du convoyeur à bande (14).

8. Dispositif d'alimentation (12) selon l'une quelconque des revendications 2 à 7, dans lequel la courroie (17) et le dispositif d'aspiration (20) sont configurés de manière à aspirer par le dessus à travers la perforation (21) de la courroie (17) et pour maintenir les préformes (1) suspendues au-dessous de la courroie (17).

9. Dispositif d'alimentation (12) selon l'une quelconque des revendications 2 à 8, dans lequel la perforation (21) se compose d'une rangée unique de trous s'étendant sur toute la longueur de la courroie (17) et agencés à mi-chemin entre des bords latéraux de la courroie (17).

10. Dispositif d'alimentation (12) selon l'une quelconque des revendications 2 à 9, comprenant :
- un détecteur de file minimale (37) positionné à l'étendue de convoyage (18) à une distance du point de sortie (16) correspondant à une longueur de file minimale de préformes ralenties (1') et configuré pour fournir un signal de file minimale à une unité de commande (38) du dispositif d'alimentation de préformes (12),
- un détecteur de file maximale (39) positionné à l'étendue de convoyage (18) à une distance du point de sortie (16) correspondant à une longueur de file maximale de préformes ralenties (1') et configuré pour fournir un signal de file maximale à l'unité de commande (38), dans lequel ladite unité de commande (38) commande le moteur (19) et la vitesse de la courroie (14) en fonction du signal de file minimale et du signal de file maximale.

11. Machine de moulage par soufflage (5), comprenant :
- une unité de moulage (6) pour mouler des objets creux (7) à partir de préformes (1), ladite unité de moulage (6) comprenant :
- au moins un moule (8) approprié pour recevoir la préforme (1),
- au moins un dispositif de chauffage (9) associé au moule (8) pour chauffer la préforme (1),
- au moins un dispositif de soufflage (10) associé au moule (8) pour réaliser l'expansion de la préforme (1) dans le moule (8) pour former l'objet creux (7),
- au moins un dispositif de refroidissement (11) associé au moule (8) pour refroidir l'objet creux (7),
- un dispositif d'alimentation (12) selon l'une quelconque des revendications 2 à 10 pour alimenter les préformes (1) depuis l'extérieur de la machine de moulage par soufflage (5) jusqu'à l'unité de moulage (6),
- un convoyeur de sortie (13) pour transporter les objets creux (7) de l'unité de moulage (6) vers l'extérieur de la machine de moulage par soufflage (5).

12. Machine de transformation ou d'inspection (5) comprenant :
- une unité de transformation ou d'inspection (6) pour fabriquer des produits (7) à partir de produits semi-finis (1) ou pour inspecter des produits ou des produits semi-finis,
- un dispositif d'alimentation (12) selon la revendication 1 pour alimenter les produits ou produits semi-finis (1) depuis l'extérieur de la machine de transformation ou d'inspection (5) jusqu'à l'unité de transformation ou d'inspection (6),
- un convoyeur de sortie (13) pour transporter les produits (7) de l'unité de transformation ou d'inspection (6) vers l'extérieur de la machine de transformation ou d'inspection (5).

13. Procédé d'alimentation de produits ou de produits semi-finis (1) à une unité de transformation ou d'inspection (6) d'une machine de transformation ou d'inspection (5), comprenant les étapes suivantes :
- le convoyage des produits ou produits semi-finis (1) depuis un point d'entrée (15) jusqu'à un point de sortie (16) par le déplacement d'une courroie (17) le long d'un chemin de courroie ayant une étendue de convoyage (18) depuis ledit point d'entrée (15) jusqu'audit point de sortie (16),
- la réception des produits ou produits semi-finis (1) depuis la courroie (17) au point de sortie (16) et le transfert des produits reçus ou des produits semi-finis reçus (1) à l'unité de transformation (6), **caractérisé par** :
- le maintien des produits ou produits semi-finis (1) contre la courroie (17) le long de l'étendue de convoyage (18) au moyen d'une aspiration à travers une perforation (21) formée dans la courroie (17),
- la fourniture d'une surface d'accumulation (23) contre laquelle la courroie (17) pousse les produits ou produits semi-finis (1) de manière à ralentir les produits ou produits semi-finis (1) par rapport au mouvement de la courroie (17) et à provoquer une file de produits ou produits semi-finis ralentis (1'), en contact l'un avec l'autre, qui s'étend depuis le point de sortie (16) dans l'étendue de convoyage (18),
- l'utilisation de l'aspiration pour maintenir les produits ou produits semi-finis ralentis (1') en contact sous pression mais glissant avec la courroie (17),
- l'utilisation du mouvement relatif entre la courroie (17) et les produits ou produits semi-finis ralentis (1') pour pousser les produits ou produits semi-finis ralentis (1') en contact sous pression les uns contre les autres et vers le point de sortie (16).

14. Procédé selon la revendication 13, dans lequel lesdits produits semi-finis (1) sont des préformes (1) et ladite unité de transformation (6) de ladite machine de transformation (5) est une unité de moulage (6) d'une machine de moulage par soufflage (5).
